(19) Europäisches Patentamt / European Patent Office / Office européen des brevets

(11) **EP 3 984 969 B1**

(12) **EUROPEAN PATENT SPECIFICATION**

(45) Date of publication and mention
of the grant of the patent:
**02.04.2025 Bulletin 2025/14**

(21) Application number: **21202483.0**

(22) Date of filing: **13.10.2021**

(51) International Patent Classification (IPC):
***C03B 37/014*** (2006.01)

(52) Cooperative Patent Classification (CPC):
**C03B 37/01446**

(54) **METHOD FOR MAKING AN OPTICAL FIBER GLASS BASE MATERIAL**

VERFAHREN ZUR HERSTELLUNG EINER LICHTLEITERVORFORM AUS GLAS

PROCÉDÉ DE FABRICATION D'UNE PRÉFORME DE FIBRE OPTIQUE DE VERRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.10.2020 JP 2020174010
14.09.2021 JP 2021149134**

(43) Date of publication of application:
**20.04.2022 Bulletin 2022/16**

(73) Proprietor: **Shin-Etsu Chemical Co., Ltd.
Tokyo 100-0005 (JP)**

(72) Inventor: **KASHIWAGI, Yusuke
Ibaraki, 314-0102 (JP)**

(74) Representative: **Pfenning, Meinig & Partner mbB
Patent- und Rechtsanwälte
Joachimsthaler Straße 10-12
10719 Berlin (DE)**

(56) References cited:
**CN-U- 207 512 075     US-A1- 2003 115 910
US-A1- 2016 318 792**

**Description**

BACKGROUND

1. TECHNICAL FIELD

The present invention relates to a method of fabricating an optical fiber glass base material, and an apparatus for fabricating an optical fiber glass base material.

2. RELATED ART

Patent Document 1 sets forth "A method of fabricating an optical fiber base material ... includes a dehydration step, in which a porous glass base material 1, 1A (porous soot body) is subjected to dehydration treatment by supplying a dehydrant that includes an inert gas into a core tube 11, 11A, and a sintering step, in which the porous glass base material 1, 1A which has been subject to dehydration treatment is sintered" (paragraph [0022]), and "using argon gas as an inert gas mixed with the dehydrant, before raising the temperature of the porous glass base material 1, 1A in the dehydration step, cause a gas having a higher thermal conductivity than that of argon gas (hereinafter, this is abbreviated as a "high thermal conductivity gas") to remain within the porous glass base material 1, 1A" (paragraph [0024]). Patent Documents 2 and 3 disclose methods that comprise dehydrating an optical fiber porous base material with a gas that includes at least a halogen or argon in a quart core tube, after the dehydrating, at least partially ventilating the quartz core tube by causing helium to distribute with the quartz core tube, and after the ventilating, transparently vitrifying the optical fiber porous base material while causing the helium to distribute within the quartz core tube. Patent Documents 2 to 4 also disclose corresponding apparatuses, with patent Document 4 disclosing the use of a plurality of heating apparatuses for dehydrating and vitrifying the base material.

[Related Art Documents]

[Patent Document]

| | |
|---|---|
| [Patent Document 1] | JP 5298186 B2 |
| [Patent Document 2] | US 2003/115910 A1 |
| [Patent Document 3] | CN 207 512 075 U |
| [Patent Document 4] | US 2016/318792 A1 |

[SUMMARY]

In a first aspect of the present invention, provided is a method of fabricating for fabricating an optical fiber glass base material according to claim 1. In particular, the fabrication method comprises a first step for dehydrating an optical fiber porous base material while causing a gas that includes at least a halogen or argon to distribute within a quartz core tube that accommodates the optical fiber porous base material. The fabrication method comprises a second step for, after the first step, at least partially ventilating within the quartz core tube by causing a gas having helium as a main component to distribute within the quartz core tube. The fabrication method comprises a third step for, after the second step, transparently vitrifying the optical fiber porous base material while causing the gas having helium as a main component to distribute within the quartz core tube.

In the second step, an integrated flow rate V2 of the gas having helium as a main component which is caused to distribute within the quartz core tube satisfies the following [Formula 1] with respect to the volume V1 of the quartz core tube.

[Formula 1]

$$0.5 \times V_1 \leq V_2 \leq 0.6 \times V1$$

The gas in the second step may be pure helium gas.

The gas that includes at least a halogen or argon in the first step may be a gas having a halogen as a main component or a gas mixture of noble gas and halogen gas.

The gas having a halogen as a main component may be a gas that includes at least one of chlorine and fluorine as a main component, and a gas mixture of noble gas and halogen gas may be a gas mixture that includes at least one of chlorine gas and fluorine gas, and at least one of helium gas and argon gas.

In the first step, from among a total flow rate of gas caused to distribute within the quartz core tube, a noble gas flow rate U1 and a halogen flow rate U2 may satisfy the following [Formula 2].

$$[\text{Formula 2}]$$

$$0.2 \le U2/(U1 + U2) \le 1.0$$

In the first step, the optical fiber porous base material may be dehydrated while causing the optical fiber porous base material to move along an extension direction of the optical fiber porous base material within the quartz core tube.

In the third step, the optical fiber porous base material may be gradually transparently vitrified from a downward end of the optical fiber porous base material by heating the optical fiber porous base material while causing the optical fiber porous base material to move downward along an extension direction of the optical fiber porous base material within the quartz core tube.

In the third step, downward movement of the optical fiber porous base material may be started along the extension direction after the temperature inside the quartz core tube has reached 1400-1650°C.

In the first step, the optical fiber porous base material may be dehydrated while causing the optical fiber porous base material to move downward along the extension direction within the quartz core tube. In the second step, within the quartz core tube may be at least partially ventilated while raising the optical fiber porous base material which was moved downward in the first step so that it is possible to gradually transparently vitrify the optical fiber porous base material from the downward end by starting downward movement of the optical fiber porous base material along the extension direction in the subsequent third step.

In the first step, the optical fiber porous base material may be dehydrated by heating over the entirety of the optical fiber porous base material.

In the first step, heating may be performed over the entirety of the optical fiber porous base material using a plurality of heating apparatuses disposed lined up along the extension direction of the optical fiber porous base material, around the quartz core tube.

In the third step, the optical fiber porous base material may be transparently vitrified by using one or more of the plurality of heating apparatuses to further raise the temperature inside the quartz core tube which was subject to temperature-raising in the first step.

In the first step, the temperature inside the quartz core tube may be raised to 1000-1300 °C. In the third step, the temperature inside the quartz core tube which was subject to the temperature-raising in the first step may be further raised to 1400-1650 °C.

In the first step, the optical fiber porous base material may be dehydrated by raising the temperature inside the quartz core tube to 1000-1300 °C.

In the third step, the optical fiber porous base material may be transparently vitrified by raising the temperature inside the quartz core tube to 1400-1650 °C.

There is described an apparatus for fabricating an optical fiber base material. The apparatus may comprise a quartz core tube having a volume V1 which can accommodate an optical fiber porous base material. The apparatus may comprise a heating apparatus disposed around the quartz core tube. The apparatus may perform a first step for dehydrating the optical fiber porous base material by the heating apparatus while a gas that includes at least a halogen or argon is caused to distribute within the quartz core tube which is accommodating the optical fiber porous base material. The apparatus may perform a second step for, after the first step, at least partially ventilating within the quartz core tube by causing a gas having helium as a main component to distribute within the quartz core tube. The apparatus may perform a third step for, after the second step, transparently vitrifying the optical fiber porous base material by the heating apparatus while causing the gas having helium as a main component to distribute within the quartz core tube.

The apparatus may further comprise a movement mechanism for causing the optical fiber porous base material, which is inserted from an opening at one end of the quartz core tube, to move along the longitudinal direction of the quartz core tube.

In the second step, an integrated flow rate V2 of the gas having helium as a main component which is caused to distribute within the quartz core tube may satisfy the following [Formula 3] with respect to the volume V1 of the quartz core tube.

[Formula 3]

$$0.5 \times V1 \leq V2 \leq 0.6 \times V1$$

In the second step, inside the quartz core tube may be at least partially ventilated by causing the pure helium gas to distribute within the quartz core tube.

The summary clause does not necessarily describe all necessary features of the embodiments of the present invention. The present invention may also be a sub-combination of the features described above.

BRIEF DESCRIPTION OF THE DRAWINGS

FIG. 1 is a view illustrating an outline of a sintering apparatus used in a first embodiment of the present invention; and

FIG. 2 is a view illustrating an outline of a sintering apparatus used in a second embodiment of the present invention.

DESCRIPTION OF EXEMPLARY EMBODIMENTS

The present invention is described below through embodiments of the invention, but the following embodiments do not limit the invention according to the claims. In addition, there is no limitation to all combinations of features described in the embodiments being essential to a means for solving the invention.

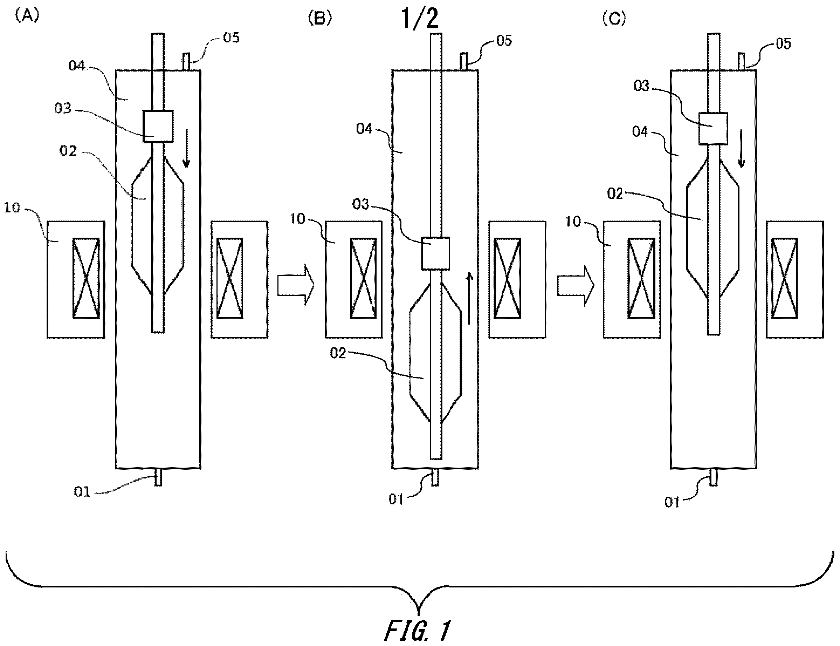

FIG. 1 is a view that illustrates an outline of a sintering apparatus used in a first embodiment in the present invention. (A) indicates a situation of an example of a first step, in which dehydration is performed while causing movement downward from an upper portion. (B) indicates a situation of an example of a second step which is subsequent to the step in (A) and in which internal gas is ventilated. Note that, at the same time as when the second step is started, an optical fiber porous base material (hereinafter may be simply referred to as a porous base material) 02 is raised to a position necessary for when a third step is started. (C) indicates a situation of an example of a third step which is subsequent to the step in (B) and in which the porous base material 02 is transparently vitrified while causing the porous base material 02 to move downward.

A sintering apparatus used in a first embodiment is an apparatus for fabricating an optical fiber base material, and is provided with a quartz core tube 04 and a heating apparatus 10. The quartz core tube 04 has a volume V1 that can accommodate the porous base material 02. The heating apparatus 10 is disposed around the quartz core tube 04.

The sintering apparatus may be further provided with a movement mechanism for causing the porous base material 02, which is inserted from an opening at one end of the quartz core tube 04, to move along the longitudinal direction of the quartz core tube 04. By a shaft 03 connected to the movement mechanism, the porous base material 02 is inserted along the longitudinal direction of the quartz core tube 04 from the opening at the upper portion of the quartz core tube 04.

The sintering apparatus performs the first step to thereby dehydrate the porous base material 02 by the heating apparatus 10 while causing gas that includes at least a halogen or argon to distribute within the quartz core tube 04 that accommodates the porous base material 02. The first step may dehydrate the porous base material 02 while causing the porous base material 02 to move within the quartz core tube 04, along the extension direction of the porous base material 02. The first step may dehydrate the porous base material 02 by raising the temperature inside the quartz core tube 04 to 1000-1300 °C.

As a specific example, the first step is started after the porous base material 02 is inserted into the quartz core tube 04 and after the opening at the upper portion of the quartz core tube 04 is closed. At the same time as the first step is started, the sintering apparatus makes a pure halogen gas or a gas mixture that includes a noble gas and a halogen gas flow from a gas inlet port 01 into the quartz core tube 04. In order to keep the pressure inside the quartz core tube 04 constant, the sintering apparatus also discharges a certain amount of gas per unit time from a gas discharging port 05. From the first step through the third step, in order to keep the pressure inside the quartz core tube 04 constant, the sintering apparatus continues to discharge a certain amount of gas per unit time from the gas discharging port 05.

At the same time as starting the first step, the sintering apparatus also starts raising the temperature in accordance with the heating apparatus 10, and heats the quartz core tube 04. At this point, making the temperature inside the quartz core tube 04 be 1100-1300 °C is desirable to dehydrate the porous base material 02. In the first step, by the movement mechanism described above, the porous base material 02 is caused to move downward from the upper portion of the quartz core tube 04.

The pure halogen gas described above is an example of a gas having a halogen as a main component. In addition, the pure halogen gas and the gas mixture that includes a noble gas and a halogen gas are each an example of a gas that includes at least a halogen or argon.

In addition, a gas having a halogen as a main component may be a gas that includes at least one of chlorine and fluorine as a main component. A gas that includes at least one of chlorine and fluorine as a main component is desirable in dehydration treatment. In addition, a gas mixture of noble gas and halogen gas may be a gas mixture that includes at least one of chlorine gas and fluorine gas, and at least one of helium gas and argon gas.

In the first step, from among the total flow rate of gas caused to distribute within the quartz core tube 04, a flow rate U1 for the noble gas and a flow rate U2 for halogen satisfy the following [Formula 2].

$$[\text{Formula 2}]$$

$$0.2 \leq U2/(U1 + U2) \leq 1.0$$

In other words, for the sintering apparatus, in the first step, it is assumed that 20-100% of the total amount of gas caused to flow into the quartz core tube 04 is halogen.

As described above, in the first step, the sintering apparatus causes a gas that includes at least a halogen or argon to distribute within the quartz core tube 04. In other words, the sintering apparatus does not cause only pure helium gas to distribute within the quartz core tube 04 in the first step. As a result, in comparison to a case of using only pure helium gas, the sintering apparatus, in the first step, can reduce the usage amount of helium gas which is more expensive than a gas that includes another element, and can reduce the cost of fabricating the optical fiber base material.

In the first step, in a case of causing a gas that includes at least a halogen or argon, for example argon gas, halogen gas, or a gas mixture that includes helium gas and these gases to distribute within the quartz core tube 04, these gases remain within the porous base material when the first step ends. These elements have low thermal conductivity in comparison to helium.

Here, as a transparent vitrification step which is performed after the dehydration step, in order to promote transparent vitrification, causing the porous base material to be transparently vitrified while causing a gas having helium, which has higher thermal conductivity than other elements, as a main component to distribute within a quartz core tube is known. However, in a case where transparent vitrification is started in a state where a gas that includes an element with a relatively low thermal conductivity remains within the porous base material, a region of the porous base material that is transparently vitrified at the beginning of the transparent vitrification step is more likely to become opaque due to the gas remaining. This is because helium gas does not sufficiently distribute near this region in the duration from when the transparent vitrification step is started and until this region is vitrified.

In contrast to this, the sintering apparatus used in the present embodiment performs the second step after the first step described above to thereby cause a gas having helium as a main component to distribute within the quartz core tube 04 and at least partially ventilate within the quartz core tube 04. The gas having helium gas as a main component may be pure helium gas. In addition, the second step may at least partially ventilate within the quartz core tube 04 while raising the porous base material 02 which was moved downward in the first step.

In addition, in the second step, an integrated flow rate V2 of the gas having helium as the main component which is caused to distribute within the quartz core tube 04 may satisfy the following [Formula 1] with respect to the volume V1 of the quartz core tube 04.

$$[\text{Formula 1}]$$
$$0.5 \times V1 \leq V2 \leq 0.6 \times V1$$

In other words, in the second step, the sintering apparatus may switch half or more of a fluid which is filled within the quartz core tube 04 at the time when the first step ends with a gas having helium as the main component.

As a specific example, the second step is started after the first step completes. At the same time as starting the second step, the sintering apparatus supplies pure helium gas into the quartz core tube 04 from the gas inlet port 01, and performs gas ventilation inside the quartz core tube 04. At the same time as starting the second step, the sintering apparatus also raises, by the movement mechanism, the porous base material 02 to a position necessary for the time when the subsequent third step is started. After raising the porous base material 02 to this position, the sintering apparatus may stop the movement mechanism for a certain amount of time, or may start the third step directly after this raising and start causing the porous base material 02 to move by the movement mechanism.

In a duration from the start of the second step and until the third step starts, the sintering apparatus makes the integrated flow rate V2, that is, the total volume V2, of pure helium gas caused to flow into the quartz core tube 04 to be 0.5 times or more the internal volume V1 of the quartz core tube 04, as indicated by the abovementioned [Formula 1]. This is desirable in order to make a region of the porous base material 02, which is vitrified at the initial period after the start of the third step, be transparent.

After the second step, the sintering apparatus also performs the third step to thereby transparently vitrify the porous base material 02 by the heating apparatus 10 while causing gas having helium as a main component to distribute within the quartz core tube 04. The third step may transparently vitrify the porous base material 02 by further raising the temperature inside the quartz core tube 04, for which the temperature was raised in the first step, to 1400-1650 °C.

The third step may also gradually transparently vitrify the porous base material 02 from the downward end thereof by heating the porous base material 02 while causing the porous base material 02 to move downward within the quartz core tube 04, along the extension direction of the porous base material 02. As described above, as an example, in the second step, within the quartz core tube 04 is at least partially ventilated while raising the porous base material 02 moved downward in the first step to a position necessary when the third sintering step is started. In this manner, by raising the porous base material 02, which was caused to move downward in the first step, to this position in the second step, in the third step which is subsequent to the second step, it is possible to gradually transparently vitrify the porous base material 02 from the downward end thereof by starting downward movement of the porous base material 02 along the extension direction of the porous base material 02.

As a specific example, the sintering apparatus starts temperature-raising by the heating apparatus 10 at the same time as when the third step is started. Making the temperature inside the quartz core tube 04 in the third step be 1400-1650 °C is desirable for transparently vitrifying the porous base material 02. In the third step, using pure helium gas is desirable for transparent vitrification of the entire length of the porous base material 02.

In the third step, the sintering apparatus causes gradual transparent vitrification to gradually progress from the vertically downward end of the porous base material 02 by, in accordance with the movement mechanism, causing the porous base material 02 to move downward in the quartz core tube 04 from the position for when the third step is started. Note that, in the third step, it is desirable for the sintering apparatus to start downward movement of the porous base material 02 along the extension direction of the porous base material 02 after the temperature inside the quartz core tube 04 has reached 1400-1650 °C.

In this manner, by virtue of the sintering apparatus used in the present embodiment, before starting a transparent vitrification step for the porous base material 02, for example before raising the temperature inside the quartz core tube 04 to approximately 1400-1650 °C, a gas having pure helium as a main component is caused to distribute within the quartz core tube 04, and within the quartz core tube 04 is at least partially ventilated. By at least partially ventilating within the quartz core tube 04 with this gas, the sintering apparatus can, before starting the transparent vitrification step, facilitate removal of gas which has low thermal conductivity and which remains in the porous base material 02. As a result thereof, the sintering apparatus, in the transparent vitrification step, can prevent a region of the porous base material 02, which is to be transparently vitrified at the beginning of the transparent vitrification step, from become opaque. Accordingly, by virtue of the sintering apparatus, it is possible to obtain an optical fiber glass base material that has been sufficiently transparently vitrified.

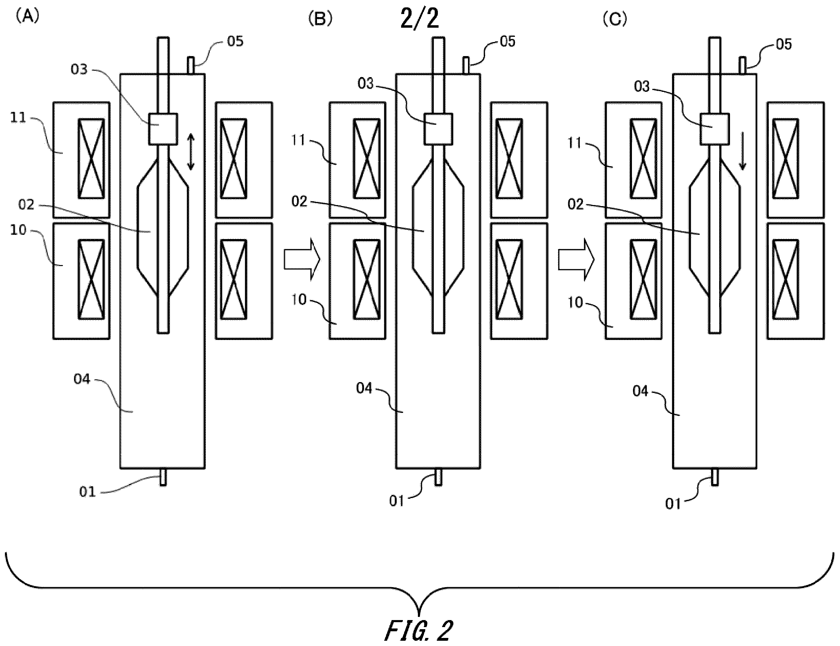

FIG. 2 is a view that illustrates an outline of a sintering apparatus used in a second embodiment in the present invention. (A) indicates a situation of an example of a first step, in which dehydration treatment is performed while causing the porous base material 02 to move up and down. (B) indicates a situation of an example of a second step which is subsequent to the step in (A) and in which internal gas is ventilated. (C) indicates a situation of an example of a third step which is subsequent to the step in (B) and in which the porous base material 02 is transparently vitrified while causing the porous base material 02 to move downward.

In the sintering apparatus used in the second embodiment, which has a configuration differing to that of the sintering apparatus according to the first embodiment, a heating apparatus 10 and a heating apparatus 11 are disposed around the quartz core tube 04. The other configurations of the sintering apparatus used in the second embodiment are similar to the configurations of the sintering apparatus used in the first embodiment, and thus the same reference numbers are applied to corresponding configurations, and duplicate descriptions are omitted.

The first step performed in the sintering apparatus used in the second embodiment is dehydrating the porous base material 02 by heating over the entirety of the porous base material 02. The first step may heat over the entirety of the porous base material 02 by using a plurality of heating apparatuses, for example the heating apparatus 10 and the heating apparatus 11, which are disposed lined up along the extension direction of the porous base material 02 around the quartz core tube 04. In this case, the third step may transparently vitrify the porous base material 02 by further raising the temperature inside the quartz core tube 04, for which the temperature was raised by the first step, by using one or more of the plurality of heating apparatuses, for example only the heating apparatus 10.

As a specific example, the sintering apparatus used in the second embodiment starts temperature-raising by the heating apparatus 10 and the heating apparatus 11 at the same time as the first step is started, and heats the quartz core tube 04. At this point, making the temperature inside the quartz core tube 04 be 1100-1300 °C is desirable to dehydrate the porous base material 02. By using the plurality of heating apparatuses 10 and 11 in this manner, it is possible to shorten the amount of time until the temperature inside the quartz core tube 04 is raised to this temperature range. In the first step, the porous base material 02 may be caused to move, by the movement mechanism, toward the lower portion from the upper portion of quartz core tube 04 or toward the upper portion from the lower portion of the quartz core tube 04. Other treatment details in the first step are similar to those in the first step according to the first embodiment, and thus duplicate description is omitted. The same applies in the subsequent second step and third step.

At the same time as starting the second step, the sintering apparatus may start raising the porous base material 02 to the position necessary for when the third step is started, and, at this time, may stop heating of the quartz core tube 04 by the heating apparatus 11. In this case, during the first step to the second step, the sintering apparatus may maintain heating of the quartz core tube 04 by the heating apparatus 10 to maintain the temperature inside the quartz core tube 04.

The sintering apparatus starts temperature-raising by the heating apparatus 10 at the same time as when the third step is started. At this time, the sintering apparatus may stop heating the quartz core tube 04 by the heating apparatus 11 throughout the third step.

Note that, as illustrated in FIG. 2, in the second embodiment, description was given for an example in which the heating apparatus 11 is disposed directly above the heating apparatus 10, but even if the heating apparatus 11 is disposed directly below the heating apparatus 10, the effect of the invention would not be impaired. In addition, a plurality of heating apparatuses may be installed directly above the heating apparatus 10, or a plurality of heating apparatuses may be installed directly below the heating apparatus 10.

By giving examples and comparative examples, description is given below in further detail regarding a method of fabricating the optical fiber base material according to the present embodiment, but the present invention is not limited to these, and various aspects are possible.

[Comparative example 1]

In a first step, the component ratio of a gas caused to distribute within a quartz core tube was 50% argon + 50% chlorine, the quartz core tube was heated so that the temperature inside became 1000-1300 °C, and dehydration was performed while causing an optical fiber porous base material to move downward from an upper portion in the quartz core tube.

In a second step, the temperature inside the quartz core tube was maintained at 1000-1300 °C, and ventilation of internal gas was performed by causing gas with the same component ratio as the gas caused to distribute in the first step to distribute within the quartz core tube. The total volume of the gas caused to distribute within the quartz core tube was made to be equivalent to 60% of the internal volume of the quartz core tube. Note that, at the same time the second step was started, the porous base material was raised to a position necessary at the time the third step was started.

In the third step, while causing pure helium gas made up of 100% helium to distribute within the quartz core tube, the temperature inside the quartz core tube was raised to 1400-1650°C, the porous base material was caused to move gradually downward, and transparent vitrification was performed from the vertically downward end of the porous base material.

As a result, it was confirmed that there was an opaque portion in a region of the porous base material that was to be transparently vitrified at the beginning of the transparent vitrification step, in other words the vertically downward end of the porous base material.

[Comparative example 2]

In a first step, the component ratio of a gas caused to distribute within a quartz core tube was 50% argon + 50% chlorine, the quartz core tube was heated so that the temperature inside became 1000-1300 °C, and dehydration was performed while causing a porous base material to move downward from an upper portion in the quartz core tube.

In a second step, the temperature inside the quartz core tube was maintained at 1000-1300 °C, and ventilation of internal gas was performed by causing pure helium gas made up of 100% helium to distribute within the quartz core tube. The total volume of the pure helium gas caused to distribute within the quartz core tube was made to be equivalent to 40% of the internal volume of the quartz core tube. Note that, at the same time the second step was started, the porous base material was raised to a position necessary at the time the third step was started.

In the third step, while causing pure helium gas made up of 100% helium to distribute within the quartz core tube, the temperature inside the quartz core tube was raised to 1400-1650°C, the porous base material was caused to move gradually downward, and transparent vitrification was performed from the vertically downward end of the porous base material.

As a result, it was confirmed that there was an opaque portion in a region of the porous base material that was to be transparently vitrified at the beginning of the transparent vitrification step, in other words the vertically downward end of the porous base material.

[Comparative example 3]

In a first step, the component ratio of a gas caused to distribute within a quartz core tube was 50% argon + 50% chlorine, the quartz core tube was heated so that the temperature inside became 1000-1300 °C, and dehydration was performed while causing a porous base material to move downward from an upper portion in the quartz core tube.

In a second step, the temperature inside the quartz core tube was maintained at 1000-1300 °C, and ventilation of internal gas was performed by causing pure helium gas made up of 100% helium to distribute within the quartz core tube. The total volume of the pure helium gas caused to distribute within the quartz core tube was made to be equivalent to 45% of the internal volume of the quartz core tube. Note that, at the same time the second step was started, the porous base material was raised to a position necessary at the time the third step was started.

In the third step, while causing pure helium gas made up of 100% helium to distribute within the quartz core tube, the temperature inside the quartz core tube was raised to 1400-1650°C, the porous base material was caused to move gradually downward, and transparent vitrification was performed from the vertically downward end of the porous base material.

As a result, it was confirmed that there was an opaque portion in a region of the porous base material that was to be transparently vitrified at the beginning of the transparent vitrification step, in other words the vertically downward end of the porous base material.

[Example 1]

In a first step, the component ratio of a gas caused to distribute within a quartz core tube was 50% argon + 50% chlorine, the quartz core tube was heated so that the temperature inside became 1000-1300 °C, and dehydration was performed while causing an optical fiber porous base material to move downward from an upper portion in the quartz core tube.

In a second step, the temperature inside the quartz core tube was maintained at 1000-1300 °C, and ventilation of internal gas was performed by causing pure helium gas made up of 100% helium to distribute within the quartz core tube. The total volume of the pure helium gas caused to distribute within the quartz core tube was made to be equivalent to 60% of the internal volume of the quartz core tube. Note that, at the same time the second step was started, the porous base material was raised to a position necessary at the time the third step was started.

In the third step, while causing pure helium gas made up of 100% helium to distribute within the quartz core tube, the temperature inside the quartz core tube was raised to 1400-1650°C, the porous base material was caused to move gradually downward, and transparent vitrification was performed from the vertically downward end of the porous base material.

As a result, it was confirmed that a region of the porous base material which was to be transparently vitrified at the beginning of the transparent vitrification step, in other words the vertically downward end of the porous base material, was also transparent.

[Example 2]

In a first step, the component ratio of a gas caused to distribute within a quartz core tube was 100% chlorine, the quartz core tube was heated so that the temperature inside became 1000-1300 °C, and dehydration was performed while causing an optical fiber porous base material to move downward from an upper portion in the quartz core tube.

In a second step, the temperature inside the quartz core tube was maintained at 1000-1300 °C, and ventilation of internal gas was performed by causing pure helium gas made up of 100% helium to distribute within the quartz core tube. The total volume of the pure helium gas caused to distribute within the quartz core tube was made to be equivalent to 40% of the internal volume of the quartz core tube. Note that, at the same time the second step was started, the porous base material was raised to a position necessary at the time the third step was started.

In the third step, while causing pure helium gas made up of 100% helium to distribute within the quartz core tube, the temperature inside the quartz core tube was raised to 1400-1650°C, the porous base material was caused to move gradually downward, and transparent vitrification was performed from the vertically downward end of the porous base material.

As a result, it was confirmed that a region of the porous base material which was to be transparently vitrified at the beginning of the transparent vitrification step, in other words the vertically downward end of the porous base material, was also transparent.

[Example 3]

In a first step, the component ratio of a gas caused to distribute within a quartz core tube was 75% helium + 25% chlorine, the quartz core tube was heated so that the temperature inside became 1000-1300 °C, and dehydration was performed while causing a porous base material to move downward from an upper portion in the quartz core tube.

In a second step, the temperature inside the quartz core tube was maintained at 1000-1300 °C, and ventilation of internal gas was performed by causing pure helium gas made up of 100% helium to distribute within the quartz core tube. The total volume of the pure helium gas caused to distribute within the quartz core tube was made to be equivalent to 60% of the internal volume of the quartz core tube. Note that, at the same time the second step was started, the porous base material was raised to a position necessary at the time the third step was started.

In the third step, while causing pure helium gas made up of 100% helium to distribute within the quartz core tube, the temperature inside the quartz core tube was raised to 1400-1650°C, the porous base material was caused to move gradually downward, and transparent vitrification was performed from the vertically downward end of the porous base material.

As a result, it was confirmed that a region of the porous base material which was to be transparently vitrified at the beginning of the transparent vitrification step, in other words the vertically downward end of the porous base material, was also transparent.

[Example 4]

In a first step, the component ratio of a gas caused to distribute within a quartz core tube was 50% argon + 50% chlorine, the quartz core tube was heated so that the temperature inside became 1000-1300 °C, and dehydration was performed while causing a porous base material to move downward from an upper portion in the quartz core tube.

In a second step, the temperature inside the quartz core tube was maintained at 1000-1300 °C, and ventilation of internal gas was performed by causing pure helium gas made up of 100% helium to distribute within the quartz core tube. The total volume of the pure helium gas caused to distribute within the quartz core tube was made to be equivalent to 50% of the internal volume of the quartz core tube. Note that, at the same time the second step was started, the porous base material was raised to a position necessary at the time the third step was started.

In the third step, while causing pure helium gas made up of 100% helium to distribute within the quartz core tube, the temperature inside the quartz core tube was raised to 1400-1650°C, the porous base material was caused to move gradually downward, and transparent vitrification was performed from the vertically downward end of the porous base material.

As a result, it was confirmed that a region of the porous base material which was to be transparently vitrified at the beginning of the transparent vitrification step, in other words the vertically downward end of the porous base material, was also transparent.

Gas conditions and results of transparent vitrification for the above-described examples and comparative examples are summarized in Table 1.

[Table 1]

| | Comparative example 1 | Comparative example 2 | Comparative example 3 | Example 1 | Example 2 | Example 3 | Example 4 |
|---|---|---|---|---|---|---|---|
| Compon ent ratio of gas in first step | 50% Ar-gon + 50% Chlorine | 50% Ar-gon + 50% Chlorine | 50% Ar-gon + 50% Chlorine | 50% Ar-gon + 50% Chlorine | Chlorine 100% | Helium 75% + Chlorine 25% | 50% Argon + 50% Chlorine |
| Compon ent ratio of gas in second step | 50% Argon + 50% Chlorine | 100% Helium | 100% Helium | 100% Helium | 100% Helium | 100% Helium | 100% Helium |
| Ratio of total volume of gas caused to distribut e in second step with respect to internal volume of quartz core tube | 60% | 40% | 45% | 60% | 60% | 60% | 50% |
| Compon ent ratio of gas in third step | 100% Helium | 100% Helium | 100% Helium | 100% Helium | 100% Helium | 100% Helium | 100% Helium |
| Transpa rency (visual observat ion) of region to be transpar ently vitrified at beginnin g of transpar ent vitrificat ion step | Opaque | Opaque | Opaque | Transpa rent | Transpa rent | Transpa rent | Transpa rent |

The following are found from the above table. The comparative example 1, as a result of ventilating by causing a gas mixture of 50% argon + 50% chlorine to distribute within the quartz core tube in the second step, has an opaque portion in a region of the porous base material which is to be transparently vitrified at the beginning of the transparent vitrification step. Accordingly, from a comparison between comparative example 1 and examples 1-4, it was found that it is desirable for the components of the gas caused to distribute within the quartz core tube in the second step to be only pure helium.

In addition, comparative examples 2 and 3 had an opaque portion in a region of the porous base material to be transparently vitrified at the beginning of the transparent vitrification step, as a result of making the total volume V2 of pure helium gas caused to distribute within the quartz core tube be 40-45% which is less than 50% of the internal volume V1 of the quartz core tube. Accordingly, from a comparison between comparative examples 2 and 3 and examples 1-4, it was found that it is desirable for the total volume V2 of pure helium gas caused to distribute within the quartz core tube in the second step be greater than or equal to 0.5 times the internal volume V1 of the quartz core tube 04.

In this manner, the ventilation conditions in the second step are found to be very important in order to prevent a region which is heated at the beginning of the transparent vitrification step from becoming opaque.

While the embodiments of the present invention have been described, the technical scope of the invention is not limited to the above described embodiments. It is apparent to persons skilled in the art that various alterations and improvements can be added to the above-described embodiments.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

EXPLANATION OF REFERENCES

01    Gas inlet port
02    Porous base material
03    Shaft connected to movement mechanism
04    Quartz core tube
05    Gas discharging port
10    Heating apparatus
11    Heating apparatus

**Claims**

**1.** A fabrication method for fabricating an optical fiber glass base material, the method comprising:

dehydrating an optical fiber porous base material (02) while causing a gas that includes at least a halogen or argon to distribute within a quartz core tube (04) that accommodates the optical fiber porous base material (02);
after the dehydrating, partially ventilating within the quartz core tube by causing a gas having helium as a main component to distribute within the quartz core tube (04); and
after the partially ventilating, transparently vitrifying the optical fiber porous base material (02) while causing the gas having helium as a main component to distribute within the quartz core tube (04), **characterized in that** in the partially ventilating, an integrated flow rate V2 of the gas having helium as a main component which is caused to distribute within the quartz core tube (04) satisfies the following [Formula 1] with respect to the volume V1 of the quartz core tube (04),

[Formula 1]

$$0.5 \times V1 \leq V2 \leq 0.6 \times V1.$$

**2.** The fabrication method according to claim 1, wherein
the gas in the partially ventilating is pure helium gas.

**3.** The fabrication method according to claim 1 or 2, wherein
the gas that includes at least a halogen or argon in the dehydrating is a gas having a halogen as a main component or a gas mixture of noble gas and halogen gas.

4. The fabrication method according to claim 3, wherein
in the dehydrating, from among a total flow rate of gas caused to distribute within the quartz core tube (04), a noble gas flow rate U1 and a halogen flow rate U2 satisfy the following [Formula 2].

[Formula 2]

$$0.2 \leq U2/(U1 + U2) \leq 1.0$$

5. The fabrication method according to any one of claims 1 to 4, wherein
in the dehydrating, the optical fiber porous base material (02) is dehydrated while causing the optical fiber porous base material (02) to move along an extension direction of the optical fiber porous base material (02) within the quartz core tube (04).

6. The fabrication method according to any one of claims 1 to 5, wherein
in the transparently vitrifying, the optical fiber porous base material (02) is gradually transparently vitrified from a downward end of the optical fiber porous base material (02) by heating the optical fiber porous base material while causing the optical fiber porous base material (02) to move downward along an extension direction of the optical fiber porous base material (02) within the quartz core tube (04).

7. The fabrication method according to claim 6, wherein
in the transparently vitrifying, downward movement of the optical fiber porous base material (02) is started along the extension direction after the temperature inside the quartz core tube (04) has reached 1400-1650°C.

8. The fabrication method according to claim 6 or 7, wherein

in the dehydrating, the optical fiber porous base material (02) is dehydrated while causing the optical fiber porous base material (02) to move downward along the extension direction within the quartz core tube (04), and
in the partially ventilating, within the quartz core tube (04) is at least partially ventilated while raising the optical fiber porous base material (02) which was moved downward in the dehydrating so that it is possible to gradually transparently vitrify the optical fiber porous base material (02) from the downward end by starting downward movement of the optical fiber porous base material (02) along the extension direction in the subsequent transparently vitrifying.

9. The fabrication method according to any one of claims 1 to 8, wherein
in the dehydrating, the optical fiber porous base material (02) is dehydrated by heating over the entirety of the optical fiber porous base material (02).

10. The fabrication method according to claim 9, wherein
in the dehydrating, heating is performed over the entirety of the optical fiber porous base material (02) using a plurality of heating apparatuses (10, 11) disposed lined up along an extension direction of the optical fiber porous base material (02), around the quartz core tube (04).

11. The fabrication method according to claim 10, wherein
in the transparently vitrifying, the optical fiber porous base material (02) is transparently vitrified by using one or more of the plurality of heating apparatuses (10, 11) to further raise the temperature inside the quartz core tube (04) which was subject to temperature-raising in the dehydrating.

12. The fabrication method according to any one of claims 1 to 11, wherein
in the dehydrating, the optical fiber porous base material (02) is dehydrated by raising the temperature inside the quartz core tube (04) to 1000-1300 °C.

13. The fabrication method according to any one of claims 1 to 12, wherein
in the transparently vitrifying, the optical fiber porous base material (02) is transparently vitrified by raising the temperature inside the quartz core tube (04) to 1400-1650 °C.

14. The fabrication method according to any one of claims 1 to 13, wherein
V2 is equivalent to 60% of V1.

**Patentansprüche**

1. Herstellungsverfahren zum Herstellen eines Glas-Basismaterials für eine optische Faser, wobei das Verfahren umfasst:

   Dehydratisieren eines porösen Basismaterials (02) für die optische Faser, während ein Gas, das zumindest ein Halogen oder Argon einschließt, veranlasst wird, sich innerhalb eines Quarzkernrohrs (04) zu verteilen, in dem das poröse Basismaterial (02) für die optische Faser aufgenommen ist;
   nach dem Dehydratisieren: partielles Ventilieren innerhalb des Quarzkernrohrs durch Veranlassen, dass ein Gas mit Helium als Hauptkomponente sich innerhalb des Quarzkernrohrs (04) verteilt; und
   nach dem partiellen Ventilieren: transparentes Vitrifizieren des porösen Basismaterials (02) für die optische Faser, während veranlasst wird, dass das Gas mit Helium als Hauptkomponente sich innerhalb des Quarzkernrohrs (04) verteilt, **dadurch gekennzeichnet, dass**
   bei dem partiellen Ventilieren eine integrierte Strömungsrate V2 des Gases mit Helium als Hauptkomponente, das veranlasst wird, sich innerhalb des Quarzkernrohrs (04) zu verteilen, die folgende [Formel 1] in Bezug auf das Volumen V1 des Quarzkernrohrs (04) erfüllt,

   [Formel 1]

   $$0{,}5 \times V1 \leq V2 \leq 0{,}6 \times V1.$$

2. Herstellungsverfahren nach Anspruch 1, wobei das Gas bei dem partiellen Ventilieren reines Heliumgas ist.

3. Herstellungsverfahren nach Anspruch 1 oder 2, wobei
   das Gas, das zumindest ein Halogen oder Argon einschließt, bei dem Dehydratisieren ein Gas mit Halogen als Hauptkomponente oder ein Gasgemisch aus Edelgas und Halogengas ist.

4. Herstellungsverfahren nach Anspruch 3, wobei
   von einer Gesamtströmungsrate eines Gases, das veranlasst wird, sich bei dem Dehydratisieren innerhalb des Quarzkernrohrs (04) zu verteilen, eine Edelgasströmungsrate U1 und eine Halogenströmungsrate U2 die folgende [Formel 2] erfüllen.

   [Formel 2]

   $$0{,}2 \leq U2/(U1 + U2) \leq 1{,}0$$

5. Herstellungsverfahren nach einem der Ansprüche 1 bis 4, wobei
   das poröse Basismaterial (02) für die optische Faser bei dem Dehydratisieren dehydratisiert wird, während veranlasst wird, dass das poröse Basismaterial (02) für die optische Faser sich entlang einer Verlaufsrichtung des porösen Basismaterials (02) für die optische Faser innerhalb des Quarzkernrohrs (04) bewegt.

6. Herstellungsverfahren nach einem der Ansprüche 1 bis 5, wobei
   das poröse Basismaterial (02) für die optische Faser bei dem transparenten Vitrifizieren allmählich ausgehend von einem unteren Ende des porösen Basismaterials (02) für die optische Faser transparent vitrifiziert wird, durch Erwärmen des porösen Basismaterials für die optische Faser, während veranlasst wird, dass das poröse Basismaterial (02) für die optische Faser sich entlang einer Verlaufsrichtung des porösen Basismaterials (02) für die optische Faser innerhalb des Quarzkernrohrs (04) abwärts bewegt.

7. Herstellungsverfahren nach Anspruch 6, wobei
   bei dem transparenten Vitrifizieren eine Abwärtsbewegung des porösen Basismaterials (02) für die optische Faser entlang der Verlaufsrichtung gestartet wird, nachdem die Temperatur innerhalb des Quarzkernrohrs (04) 1400-1650 °C erreicht hat.

8. Herstellungsverfahren nach Anspruch 6 oder 7, wobei

   das poröse Basismaterial (02) für die optische Faser bei dem Dehydratisieren dehydratisiert wird, während veranlasst wird, dass das poröse Basismaterial (02) für die optische Faser sich entlang der Verlaufsrichtung innerhalb des Quarzkernrohrs (04) abwärts bewegt, und

bei dem partiellen Ventilieren innerhalb des Quarzkernrohrs (04) zumindest partiell ventiliert wird, während das poröse Basismaterial (02) für die optische Faser, das bei dem Dehydratisieren nach unten bewegt wurde, angehoben wird, so dass es möglich ist, das poröse Basismaterial (02) für die optische Faser durch Starten einer Abwärtsbewegung des porösen Basismaterials (02) für die optische Faser entlang der Verlaufsrichtung bei dem anschließenden transparenten Vitrifizieren vom unteren Ende her allmählich transparent zu vitrifizieren.

9. Herstellungsverfahren nach einem der Ansprüche 1 bis 8, wobei
das poröse Basismaterial (02) für die optische Faser bei dem Dehydratisieren durch Erwärmen über die Gesamtheit des porösen Basismaterials (02) für die optische Faser dehydratisiert wird.

10. Herstellungsverfahren nach Anspruch 9, wobei
bei dem Dehydratisieren eine Erwärmung über die Gesamtheit des porösen Basismaterials (02) für die optische Faser unter Verwendung von Heizgeräten (10, 11) durchgeführt wird, die entlang einer Verlaufsrichtung des porösen Basismaterials (02) für die optische Faser um das Quarzkernrohr (04) herum in einer Reihe angeordnet sind.

11. Herstellungsverfahren nach Anspruch 10, wobei
das poröse Basismaterial (02) für die optische Faser bei dem transparenten Vitrifizieren unter Verwendung eines oder mehrerer von der Mehrzahl von Heizgeräten (10, 11) transparent vitrifiziert wird, um die Temperatur innerhalb des Quarzkernrohrs (04), das bei der Dehydrierung einem Temperaturanstieg ausgesetzt war, weiter zu erhöhen.

12. Herstellungsverfahren nach einem der Ansprüche 1 bis 11, wobei
das poröse Basismaterial (02) für die optische Faser bei dem Dehydratisieren durch Erhöhen der Temperatur innerhalb des Quarzkernrohrs (04) auf 1000-1300 °C dehydratisiert wird.

13. Herstellungsverfahren nach einem der Ansprüche 1 bis 12, wobei
das poröse Basismaterial (02) für die optische Faser bei dem transparenten Vitrifizieren durch Erhöhen der Temperatur innerhalb des Quarzkernrohrs (04) auf 1400-1650 °C transparent vitrifiziert wird.

14. Herstellungsverfahren nach einem der Ansprüche 1 bis 13, wobei
V2 äquivalent ist zu 60 % V1.


**Revendications**

1. Procédé de fabrication pour fabriquer un matériau de base en verre de fibre optique, le procédé comprenant :

la déshydratation d'un matériau de base poreux de fibre optique (02) tout en provoquant la distribution d'un gaz qui inclut au moins un halogène ou de l'argon à l'intérieur d'un tube à âme en quartz (04) qui loge le matériau de base poreux de fibre optique (02) ;
après la déshydratation, la ventilation partielle à l'intérieur du tube à âme en quartz en provoquant la distribution d'un gaz comportant de l'hélium en tant que composant principal à l'intérieur du tube à âme en quartz (04) ; et
après la ventilation partielle, la vitrification de façon transparente du matériau de base poreux de fibre optique (02) tout en provoquant la distribution du gaz comportant de l'hélium en tant que composant principal à l'intérieur du tube à âme en quartz (04), **caractérisé en ce que** :
lors de la ventilation partielle, un débit d'écoulement intégré V2 du gaz comportant de l'hélium en tant que composant principal dont la distribution est provoquée à l'intérieur du tube à âme en quartz (04) satisfait la [Formule 1] suivante en relation avec le volume V1 du tube à âme en quartz (04) :

$$[\text{Formule 1}]$$
$$0,5 \times V1 \leq V2 \leq 0,6 \times V1.$$

2. Procédé de fabrication selon la revendication 1, dans lequel le gaz lors de la ventilation partielle est du gaz hélium pur.

3. Procédé de fabrication selon la revendication 1 ou 2, dans lequel :
le gaz qui inclut au moins un halogène ou de l'argon lors de la déshydratation est un gaz qui comporte un halogène en tant que composant principal ou un mélange de gaz constitué par un gaz noble et un gaz halogène.

13

4. Procédé de fabrication selon la revendication 3, dans lequel :
lors de la déshydratation, parmi un débit d'écoulement total de gaz dont la distribution est provoquée à l'intérieur du tube à âme en quartz (04), un débit d'écoulement de gaz noble U1 et un débit d'écoulement d'halogène U2 satisfont la [Formule 2] suivante :

[Formule 2]

$$0,2 \leq U2/(U1 + U2) \leq 1,0.$$

5. Procédé de fabrication selon l'une quelconque des revendications 1 à 4, dans lequel :
lors de la déshydratation, le matériau de base poreux de fibre optique (02) est déshydraté tout en provoquant le déplacement du matériau de base poreux de fibre optique (02) suivant une direction d'extension du matériau de base poreux de fibre optique (02) à l'intérieur du tube à âme en quartz (04).

6. Procédé de fabrication selon l'une quelconque des revendications 1 à 5, dans lequel :
lors de la vitrification de façon transparente, le matériau de base poreux de fibre optique (02) est vitrifié de façon transparente progressivement depuis une extrémité vers le bas du matériau de base poreux de fibre optique (02) en chauffant le matériau de base poreux de fibre optique tout en provoquant le déplacement du matériau de base poreux de fibre optique (02) vers le bas suivant une direction d'extension du matériau de base poreux de fibre optique (02) à l'intérieur du tube à âme en quartz (04).

7. Procédé de fabrication selon la revendication 6, dans lequel :
lors de la vitrification de façon transparente, le déplacement vers le bas du matériau de base poreux de fibre optique (02) est démarré suivant la direction d'extension après que la température à l'intérieur du tube à âme en quartz (04) a atteint 1400-1 650 °C.

8. Procédé de fabrication selon la revendication 6 ou 7, dans lequel :

lors de la déshydratation, le matériau de base poreux de fibre optique (02) est déshydraté tout en provoquant le déplacement du matériau de base poreux de fibre optique (02) vers le bas suivant la direction d'extension à l'intérieur du tube à âme en quartz (04) ; et
lors de la ventilation partielle, l'intérieur du tube à âme en quartz (04) est au moins partiellement ventilé tout en remontant le matériau de base poreux de fibre optique (02) qui a été déplacé vers le bas lors de la déshydratation de telle sorte qu'il soit possible de vitrifier de façon transparente progressivement le matériau de base poreux de fibre optique (02) depuis l'extrémité vers le bas en démarrant le déplacement vers le bas du matériau de base poreux de fibre optique (02) suivant la direction d'extension lors de la vitrification de façon transparente subséquente.

9. Procédé de fabrication selon l'une quelconque des revendications 1 à 8, dans lequel :
lors de la déshydratation, le matériau de base poreux de fibre optique (02) est déshydraté en effectuant un chauffage sur la totalité du matériau de base poreux de fibre optique (02).

10. Procédé de fabrication selon la revendication 9, dans lequel :
lors de la déshydratation, le chauffage est effectué sur la totalité du matériau de base poreux de fibre optique (02) en utilisant une pluralité d'appareils de chauffage (10, 11) disposés de telle sorte qu'ils soient alignés suivant une direction d'extension du matériau de base poreux de fibre optique (02), autour du tube à âme en quartz (04).

11. Procédé de fabrication selon la revendication 10, dans lequel :
lors de la vitrification de façon transparente, le matériau de base poreux de fibre optique (02) est vitrifié de façon transparente en utilisant un ou plusieurs de la pluralité d'appareils de chauffage (10, 11) afin d'augmenter davantage la température à l'intérieur du tube à âme en quartz (04) qui a été soumis à une augmentation de température lors de la déshydratation.

12. Procédé de fabrication selon l'une quelconque des revendications 1 à 11, dans lequel :
lors de la déshydratation, le matériau de base poreux de fibre optique (02) est déshydraté en augmentant la température à l'intérieur du tube à âme en quartz (04) jusqu'à 1 000-1 300 °C.

13. Procédé de fabrication selon l'une quelconque des revendications 1 à 12, dans lequel :

lors de la vitrification de façon transparente, le matériau de base poreux de fibre optique (02) est vitrifié de façon transparente en augmentant la température à l'intérieur du tube à âme en quartz (04) jusqu'à 1 400-1 650 °C.

14. Procédé de fabrication selon l'une quelconque des revendications 1 à 13, dans lequel :
V2 est équivalent à 60 % de V1.

*FIG. 1*

EP 3 984 969 B1

*FIG. 2*

EP 3 984 969 B1

**EP 3 984 969 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 5298186 B
- US 2003115910 A1
- CN 207512075 U
- US 2016318792 A1